# EUROPÄISCHE PATENTSCHRIFT

(11) **EP 1 972 550 B1**
(45) Veröffentlichungstag und Bekanntmachung des Hinweises auf die Patenterteilung: **29.04.2015**
(21) Anmeldenummer: 08005205.3
(22) Anmeldetag: 19.03.2008
(51) Int. Cl.: B64C 25/14, B64C 25/02

(54) **Flugzeugfahrwerk**
Airplane landing gear
Train d'atterrissage d'avion

(30) Priorität: 19.03.2007 DE 102007013037; 23.04.2007 DE 102007019052
(43) Veröffentlichungstag der Anmeldung: 24.09.2008
(73) Patentinhaber: Liebherr-Aerospace Lindenberg GmbH, 88161 Lindenberg/Allgäu (DE)
(72) Erfinder: Meyer, Jörg, Dipl.-Ing., 88255 Baienfurt (DE); Grabherr, Ulrich, Dipl.-Ing., 88145 Opfenbach (DE); Hufenbach, Werner, Prof. Dr., 01324 Dresden (DE); Helms, Olaf, Dr.-Ing., 01309 Dresden (DE); Renner, Ole, Dipl.-Ing., 01099 Dresden (DE); Gude, Maik, Dr.-Ing., 01324 Dresden (DE)
(74) Vertreter: Herrmann, Uwe

(56) Entgegenhaltungen:
- EP-A1- 0 770 472
- US-A- 4 336 868
- US-A1- 2007 007 386

## Beschreibung

Die Erfindung betrifft ein Flugzeugfahrwerk mit wenigstens einem Fahrwerksbein.

Insbesondere im Bereich der Luftfahrt ist es von wesentlicher Bedeutung, dass die luftfahrttechnischen Komponenten in Leichtbauweise hergestellt werden. Hochbeanspruchte Fahrwerkskomponenten entstehen bislang in zum Teil sehr aufwändiger metallischer Leichtbauweise, wobei durch langjährige Entwicklungs- und Optimierungsprozesse die Leichtbaupotentiale bereits weitgehend ausgeschöpft sind.

Ein Flugzeugfahrwerk mit einem Fahrwerksbein aus Faservenbundwerkstoff ist aus US 4336868 bekannt.

Der vorliegenden Erfindung liegt daher die Aufgabe zugrunde, ein Flugzeugfahrwerk dahingehend weiterzubilden, dass dieses einerseits ein besonders geringes Gewicht aufweist und andererseits strukturmechanischen und fertigungstechnischen Restriktionen genügt.

Diese Aufgabe wird gelöst durch die technischen Merkmale des Anspruchs 1.

In weiterer Ausgestaltung der Erfindung ist vorgesehen, dass die Strebe aus wenigstens zwei schwenkbar miteinander verbundenen Teilen besteht, von denen eines an dem Fahrwerksbein befestigt ist und das andere am Flugzeugrumpf fixierbar ist, wobei das am Flugzeugrumpf fixierbare Teil aus einem Faserverbundwerkstoff besteht oder einen Faserverbundwerkstoff aufweist.

In bevorzugter Ausgestaltung der Erfindung sind beide der gewichtsbestimmenden Komponenten des Flugzeugfahrwerks, nämlich das Fahrwerksbein und die obere Kniestrebe aus Faserverbundwerkstoff hergestellt.

Des Weiteren kann vorgesehen sein, dass das Fahrwerksbein wenigstens eine Rohrstruktur zur Aufnahme eines Feder-Dämpfer-Systems und/oder eines Schubrohres aufweist, an dem die Radachsenbaugruppe angeordnet ist. Vorzugsweise weist das Fahrwerksbein des erfindungsgemäßen Flugzeugfahrwerks eine Rohrstruktur auf, die vorzugsweise eine zylindrische Innenkontur hat und die das mit der Radachsenbaugruppe verbundene Schubrohr und ein Feder-Dämpfer-System aufnimmt. Zu diesem Zwecke ist die Rohrstruktur an ihrem oberen Ende vorzugsweise geschlossen und kann dadurch die Axialkräfte des Feder-Dämpfer-Systems formschlüssig aufnehmen.

Vorzugsweise ist somit vorgesehen, dass wenigstens für die beiden Strukturkomponenten Fahrwerksbein und obere Kniestrebe eine beanspruchs-, werkstoff- und fertigungsgerechte Mehrschalen-Bauweise zur Anwendung kommt. Dabei kann vorgesehen sein, dass die Schalenstrukturen mit der Rohrstruktur in Verbindung stehen und vorzugsweise eine Hohlstruktur ausbilden, in der die Rohrstruktur aufgenommen ist. Das Fahrwerksbein besteht somit vorzugsweise aus einer zentralen Rohrstruktur und zwei Schalenstrukturen, wobei die Rohrstruktur wie ausgeführt zur Aufnahme eines Schubrohres sowie eines Feder-Dämpfer-Systems dienen kann.

Dabei ist vorzugsweise vorgesehen, dass die Rohrstruktur fest zwischen der Innen- und Außenschale eingeschlossen ist, wodurch eine strukturelle Einheit entsteht, mit der die in der Rohrstruktur eingeleiteten Kräfte und Momente kraftflussgerecht auf die Lagerstellen übertragen werden können. Die Lagerstellen sind in geeigneter Weise an den Schalenstrukturen bzw. am Fahrwerksbein angeordnet. Dementsprechend ist in weiterer Ausgestaltung der Erfindung vorgesehen, dass das Fahrwerksbein eine oder mehrere Lagerstellen aufweist, mittels derer das Fahrwerksbein an einer Rumpfstruktur eines Flugzeuges und/oder an einer das Fahrwerksbein stützenden Strebe und/oder an einer Betätigungseinheit zum Ein- und Ausfahren des Fahrwerksbeines fixierbar ist.

In weiterer Ausgestaltung der Erfindung weist die Strebe eine oder mehrere Lagerstellen auf, mittels derer die Strebe an einer Rumpfstruktur eines Flugzeuges und/oder an dem Fahrwerksbein fixierbar ist. Auch kann vorgesehen sein, dass die Strebe aus mehreren Teilen besteht, die Lagerstellen aufweisen, mittels derer die Teile schwenkbar miteinander in Verbindung stehen. Denkbar ist, dass die Strebe aus zwei Teilen besteht, nämlich aus einer oberen Kniestrebe, die an einer Rumpfstruktur des Flugzeuges angelenkt ist, und aus einer unteren Kniestrebe, die schwenkbar mit der oberen Kniestrebe in Verbindung steht, wobei vorzugsweise wenigstens die obere Kniestrebe aus Faserverbundwerkstoff besteht.

Besonders vorteilhaft ist es, wenn sich die Schalenstrukturen des Fahrwerksbeins bzw. die Strebe vorzugsweise in ihren Randbereichen unter Ausbildung eines oder mehrerer Überlappungsbereiche flächig überlappen.

Die Schalenstrukturen überlappen sich vorzugsweise großflächig und sind vorzugsweise in diesem Überlappungsbereich fest miteinander verbunden. Die Überlappungsbereiche weisen somit etwa die doppelte Wandstärke auf und sind als Verstärkungsrippen ausgeführt, mit denen eine unerwünschte Durchbiegung des Fahrwerkbeins bzw. der Strebe in Fahrtrichtung wirkungsvoll verhindert wird.

Vorzugsweise ist die genannte Schalenstruktur des Fahrwerkbeins breit ausgeführt und der Abstand der Schwenklager ist vergleichsweise groß gewählt, so dass Kräfte und Momente quer zur Fahrrichtung sicher auf die Fahrzeugstruktur übertragen werden können.

Aufgrund der Tatsache, dass die Schalenstrukturen im Überlappungsbereich eine besonders hohe Festigkeit aufweisen bzw. besonders hohe Kräfte aufnehmen können, sind die genannten Lagerstellen wenigstens zum Teil vorzugsweise in dem oder den Überlappungsbereichen angeordnet.

Dies kann beispielsweise für die hoch belasteten Lageraugen für die Schwenklager, mittels derer das Fahrwerksbein schwenkbar an der Rumpfstruktur eines Flugzeuges angelenkt ist, für das Kniestrebenlager, in dem die Strebenstruktur mit dem Fahrwerksbein schwenkbar in Verbindung steht sowie für die Anbindung des Betätigungszylinders an das Fahrwerksbein gelten. Die überlappende Bauweise gewährt dabei eine günstige Verteilung der eingeleiteten Lasten auf die wenigstens zwei Schalenstrukturen. Werden die Bolzenverbindungen in Richtung der Bolzenachse vorgespannt, wird die Faserverbundstruktur im Lochbereich gestützt, wodurch sich eine weitere Erhöhung der Lochlaibungsfestigkeit ergeben kann.

Sollen in den Lageraugen bewegte Bolzen aufgenommen werden, kann von Vorteil sein, metallische Buchsen beispielsweise aus Stahl oder Bronze in die Lageraugen zu integrieren.

Der Überlappungsbereich eignet sich aufgrund seiner hervorragenden Festigkeit ferner zur Positionierung weiterer Lager bzw. Bauteile, wie beispielsweise der Lagerstellen für die Türbetätigungskinematik sowie zur Befestigung von Scheinwerfern und sonstigen Aggregaten.

An dieser Stelle sei darauf hingewiesen, dass die vorliegende Erfindung nicht auf Fahrwerksbeine bzw. Kniestreben beschränkt ist, die aus genau zwei Schalenstrukturen bestehen. Grundsätzlich sind auch mehr als zwei Schalenstrukturen einsetzbar.

In weiterer Ausgestaltung der Erfindung ist vorgesehen, dass das Fahrwerksbein ein Lenkungsgehäuse aufweist bzw. dass mit Fahrwerksbein ein Lenkungsgehäuse in Verbindung steht. Dies kann an dem Fahrwerksbein als separates Teil angeordnet sein oder einen integralen Bestandteil des Fahrwerksbeins bilden. Das bei Bugfahrwerken benötigte Lenkungsgehäuse kann somit als separate Komponente gefertigt und an geeigneter Position angeordnet werden oder als integraler Bestandteil vorgesehen werden.

Denkbar ist es, dass das Lenkungsgehäuse an einem Flansch befestigt ist, der einen integralen Bestandteil einer der Schalenstrukturen bildet. Möglich ist es, dass die Schalenstrukturen des Fahrwerkbeins eine Innenschale und eine Außenschale bilden und dass der Flansch einen integralen Bestandteil der Außenschale darstellt.

Die Anbindung des Lenkungsgehäuse kann dabei stoffschlüssig oder formschlüssig ausgeführt werden. Ein Formschluss kann beispielsweise durch Formelemente in den Montageflächen von Flansch und Gehäuse sowie durch metallische Verbindungselemente, wie etwa Niete oder Schrauben hergestellt werden.

Wie bereit ausgeführt, kann die Strebe bzw. Teile davon, und besonders bevorzugt die obere Kniestrebe ähnlich wie das beschriebene Fahrwerksbein aus einer faserverstärkten Innen- und Außenschale aufgebaut sein. Beide Faserverbundschalen sind vorzugsweise fest miteinander verbunden und bilden eine steife Hohlstruktur. Denkbar ist, die Strebe als obere und untere Kniestrebe auszuführen, die über ein Kniegelenk miteinander verbunden sind. Die Kniestrebenanordnung hat die Aufgabe, bei ausgefahrenem Fahrwerk das Fahrwerksbein zu stützen und zu arretieren. Bei ausgefahrenem Fahrwerk ist die Kniestrebenanordnung vorzugsweise im gestreckten Zustand arretiert und ermöglicht dann eine steife Abstützung des Fahrwerksbeins gegenüber der Flugzeugstruktur.

In bevorzugter Ausgestaltung der Erfindung ist vorgesehen, dass die Strebe bzw. die genannte obere Kniestrebe über zwei Schwenklager an der Flugzeugstruktur angelenkt ist. Denkbar ist es, dass vom Fahrwerksbein über ein sphärisches Lager Zug- und Druckkräfte eingeleitet und über die genannten Schwenklager der Strebe bzw. der oberen Kniestrebe auf die Flugzeugstruktur übertragen werden. Auch hier kann vorgesehen sein, dass ein großer Stützabstand der beiden Schwenklager der Strebe vorgesehen ist, wodurch eine ausreichende Stabilität der Kniestrebenanordnung gegen seitliches Ausknicken bei Druckbelastung gewährleistet ist.

Wie bereits oben ausgeführt, sind die Schalenstrukturen der Strebe bzw. der oberen Kniestrebe vorzugsweise in einem großflächigen Überlappungsbereich fest miteinander verbunden. Die hochbelasteten Lageraugen für das Kniegelenk, mit dem die obere Kniestrebe mit einer unteren Kniestrebe schwenkbar.in Verbindung steht sowie die Lageraugen für das obere Schwenklager, über das die Strebe bzw. die obere Kniestrebe schwenkbar mit einer Flugzeugstruktur in Verbindung steht, können vorzugsweise in dem dickwandigen Überlappungsbereich angeordnet sein. Grundsätzlich kann alternativ oder zusätzlich die untere Kniestrebe aus einem Faserverbundwerkstoff bestehen.

In weiterer Ausgestaltung der Erfindung ist vorgesehen, dass die Strebe oder ein Teil der Strebe eine Y-förmig verzweigte Grundstruktur aufweist, in deren Ästen Lagerstellen zur Fixierung der Strebe an einer Rumpfstruktur eines Flugzeuges vorgesehen sind.

Denkbar ist es, einen Steg vorzusehen, der sich zwischen den Ästen der Y-förmig verzweigten Grundstruktur erstreckt und der die Aufgabe hat, ein seitliches Ausweischen der zugehörigen Strebenzweige der Y-förmigen Struktur zu vermeiden. Der Steg wird beanspruchsgerecht in die Außenschale der Strebe bzw. der oberen Kniestrebe integriert.

Wie oben ausgeführt, besteht das Fahrwerksbein und/oder die Strebe bzw. die obere Kniestrebe vollständig oder teilweise aus einem Faserverbundwerkstoff. Denkbar ist es, einen Faser-Kunststoff-Verbund mit hoher spezifischer Festigkeit und Steifigkeit sowie niedriger Dichte einzusetzen. Dies wird beispielsweise dadurch erreicht, dass der Werkstoff aus langen oder endlos verlaufenden beanspruchungsgerecht orientierten Verstärkungsfasern besteht. In Betracht kommen beispielsweise Glasfasern, Aramidfasern oder Kohlenstofffasern. Diese sind vorzugsweise in eine thermo- oder duroplastische Kunststoffmatrix eingebaut.

Für den Aufbau der oben genannten Schalenstrukturen für das Fahrwerksbein bzw. für die Strebe bzw. die obere Kniestrebe kommt beispielsweise eine Schichtung von textilen Flächenhalbzeugen in Betracht, wie beispielsweise Geweben, Gelegen oder Gestricken.

In den genannten Überlappungsbereichen, in denen die zwei oder mehr als zwei Schalenstrukturen miteinander in Verbindung stehen, kann es zu Fehlbeanspruchungen kommen, die für Laminate- und Klebeverbindungen besonders ungünstig sind und zum Versagen des Bauteils führen können. Daher ist es denkbar, insbesondere in diesen Bereichen, geeignete Verbindungselemente, wie beispielsweise vorgespannte metallische Verbindungselemente, beispielsweise Bolzen, Schrauben oder Nieten zur hochfesten formschlüssigen Verbindung der beiden Schalenstrukturen zumindest in diesen Überlappungsbereichen einzusetzen. Die Verbindungselemente dienen darüber hinaus als Verstärkung in Dickenrichtung (z-Verstärkung). Diese Verbindungselemente können beispielsweise am oberen und unteren Einspannbereich der zentralen Rohrstruktur gemäß Anspruch 6 und/oder im Bereich der Lagerstellen angeordnet sein, mittels derer das Fahrwerksbein und/oder die Strebe an einer Rumpfstruktur eines Flugzeuges schwenkbar gelagert ist.

In weiterer Ausgestaltung der Erfindung ist vorgesehen, dass wenigstens ein Teil der Verstärkungsfasern in etwa parallel zur Achse der genannten Rohrstruktur und/oder parallel zu dem Weg bzw. auf dem Weg zwischen Lasteinleitungspunkten angeordnet sind. Angestrebt ist somit eine beanspruchsgerechte Faserorientierung. Da das Fahrwerksbein im Wesentlichen einer globalen Biegebeanspruchung ausgesetzt ist, ist vorzugsweise ein hoher Anteil der Verstärkungsfasern etwa parallel zur Achse der Rohrstruktur und auf kurzem direktem Weg zwischen den Lasteinleitungspunkten anzuordnen. Darüber hinaus sind zur Übertragung des Lenkmomentes zwischen Lenkungsgehäuse und Schwenklager Fasern in einem Winkel von +/- 45 ° zur Rohrlängsachse zu orientieren.

Eine beanspruchsgerechte Orientierung der Fasern ist selbstverständlich vorzugsweise auch in der Strebe bzw. in der genannten oberen Kniestrebe vorzunehmen. Die einzelnen Abschnitte der Y-förmigen Kniestrebe übertragen im Wesentlichen Zug- und Druckkräfte, so dass ein hoher Anteil der Verstärkungsfasern entlang der Strebenabschnitte auf kurzen und direktem Wege zwischen Lasteinleitungspunkten anzuordnen ist.

Sowohl für das Fahrwerksbein als auch für die Strebe gilt, dass im Bereich von hochbelasteten Bolzenverbindungen zur Gewährleistung einer hohen Lochlaibungsfestigkeit ein quasi isotroper Lagenaufbau von Vorteil ist. Hierzu kann das Laminat darüber hinaus lokal aufgedickt, d.h. verstärkt werden.

Bei Bolzenlöchern mit geringem Abstand zum Bauteilrand können lokale Schlaufenanordnungen vorgesehen sein, mittels derer ertragbare Lagerkräfte gesteigert werden können.

In weiterer Ausgestaltung der Erfindung ist vorgesehen, dass die Bestandteile des Fahrwerksbeins und/oder der Strebe durch eine Verbindungstechnik, insbesondere durch Kleben oder Nieten aneinander gefügt sind oder in einem Fertigungsschritt hergestellt sind. Vorzugsweise sind die Schalenstrukturen von Fahrwerksbein und Strebe bzw. oberer Kniestrebe in dem Überlappungsbereich beispielsweise durch Kleben oder Nieten oder eine andere geeignete Verbindungstechnik aneinander gefügt.

Die Schalenstrukturen von Fahrwerksbein und/oder Strebe entstehen vorzugsweise als Schichtaufbau aus konfektionierten und beanspruchungsgerecht ausgerichteten und positionierten textilen Vertärkungshalbzeugen, wie etwa Geweben, Gelegen oder Gestricken.

Die Faserverstärkung der genannten Rohrstruktur des Fahrwerksbeins entsteht vorzugsweise durch eine wickeltechnische Ablage von Faserrovings oder textilen Halbzeugen auf einem Kern, der später in ein Formwerkzeug eingebracht wird.

In Bereichen hoher Lastkonzentrationen können die Schichtaufbauten durch beanspruchsgerechte Faserpreforms ergänzt werden. Denkbar ist es, diese Preforms durch nähttechnisches Fixieren von Fasersträngen auf einem textilen Trägermaterial reproduzierbar herzustellen (tailered fiber placement).

Wie oben ausgeführt, können die einzelnen Schalen bzw. rohrförmigen Strukturen der Strebe bzw. der oberen Kniestrebe und des Fahrwerksbeins voneinander getrennt gefertigt und anschließend beispielsweise mittels Kleben oder Nieten gefügt werden. Alternativ dazu besteht die Möglichkeit, die genannten Strukturen, d.h. die Strebe bzw. das Fahrwerksbein bzw. Teile in einem Fertigungsprozess (nass-in-nass) herzustellen.

Die vorliegende Erfindung betrifft des Weiteren ein Verfahren (Anspruch 24) zur Herstellung eines Fahrwerkbeins oder eines oder mehrerer Teile eines Fahrwerksbeins und/oder einer Strebe oder eines oder mehrerer Teile einer Strebe eines Flugzeugfahrwerks nach einem der Ansprüche 1 bis 23, das dadurch gekennzeichnet ist, dass diese Herstellung durch das Verfahren des Resin-Transfer-Moulding erfolgt. Insbesondere für die reproduzierbare Fertigung des Fahrwerksbeins des erfindungsgemäßen Flugzeugfahrwerk in einem Schritt (nass-in-nass) ist das Resin-Transfer-Moulding (RTM) - Verfahren von besonderem Vorteil. Das Verfahren kann derart durchgeführt werden, dass trockene oder auch vorkonsolidierte Verstärkungshalbzeuge oder Preforms in einem Formwerkzeug positioniert werden, das sodann evakuiert wird. Schließlich wird Reaktionsharz in das Formwerkzeug eingepresst. Denkbar ist es, die trockenen Verstärkungshalbzeuge oder Preforms in einem geschlossenen Formwerkzeug zu positionieren und dann mit einer Vakuumpumpe die verbleibende Luft zu evakuieren und schließlich mit hohem Druck Reaktionsharz einzupressen.

Dabei ist es denkbar, zur Herstellung des Fahrwerksbeins zunächst den Faserzuschnitt für die Innenschale auf dem Unterwerkzeug abzulegen und durch Drapieren der Formoberfläche anzupassen.

Anschließend kann der Wickelkern der mit der Faserverstärkung für die Rohrstruktur im Formwerkzeug positioniert ist, aufgelegt werden. Vorzugsweise wird das Fasermaterial der Rohrstruktur zunächst auf einem Kern wickeltechnisch abgelegt, der sodann in das Formwerkzeug eingelegt wird.

Zur Definition des Abstandes von Außen- und Innenschalen werden vorzugsweise Kerne aus Strukturschaum oder auswaschbare Kerne eingelegt.

Im Anschluß daran werden die Verstärkungshalbzeuge für die Außenschale im Werkzeug ausgerichtet.

Für die Konsolidierung wird der noch trockene Faseraufbau nun zwischen Ober - und Unterwerkzeug vakuumdicht eingeschlossen und Reaktionsharz injiziert.

Zur Gewährleistung einer vollständigen Harzinfiltration bei hohem Faservolumengehalt in der Rohrstruktur kann es notwendig sein, die Harztränkung nicht erst im Formwerkzeug, sondern schon vor dem Einbringen des Fasermaterials für die Rohrstrukturen in das Formwerkzeug vorzunehmen. Denkbar ist es, die Harztränkung schon bei der wickeltechnischen Ablage der Verstärkungsfasern auf dem Kern vorzunehmen. In diesem Fall wird die Rohrstruktur sodann vorkonsolidiert in das RTM-Werkzeug eingelegt.

Das Verfahren kann in einem Formwerkzeug durchgeführt werden, das ein Unter- und ein Oberwerkzeug aufweist. Ebenfalls ist es denkbar, dass Oberwerkzeug durch eine Vakuumfolie zu ersetzen. Es ist somit auch möglich, insbesondere zur Erzielung höherer Faservolumenanteile ein offenes Werkzeugsystem zu verwenden, bei dem das Oberwerkzeug durch eine Vakuumfolie ersetzt wird. Mit diesem Werkzeugsystem ist sowohl die Verarbeitung von trockenen Faserhalbzeugen mit anschließender Harzinjektion als auch die Ablage von vorimprägnierten Verstärkungshalbzeugen (Prepregs) möglich. Eine Steigerung der Faservolumenanteile ist beispielsweise durch Vergrößerung des Umgebungsdrucks etwa in einem Autoklav möglich.

Wie bereits oben ausgeführt, ist es ebenfalls möglich und von der Erfindung erfaßt, die einzelnen Strukturkomponenten des Fahrwerksbeins bzw. der Strebe bzw. der oberen Kniestrebe getrennt herzustellen und diese sodann zu verbinden. Dies führt allerdings zu einem erhöhten Montageaufwand, da die hochfeste Verbindung zwischen den Komponenten beispielsweise durch Kleben oder Bolzen hergestellt werden muss.

Die vorliegende Erfindung betrifft des Weiteren ein Fahrwerksbein für ein Flugzeugfahrwerk, wobei das Fahrwerksbein gemäß dem kennzeichnenden Teil eines der Ansprüche 1 bis 24 ausgeführt ist sowie eine Strebe für ein Flugzeugfahrwerk, wobei die Strebe gemäß dem kennzeichnenden Teil eines der Ansprüche 2 bis 24 ausgeführt ist.

Weitere Einzelheiten und Vorteile der Erfindung werden anhand eines in der Zeichnung dargestellten Ausführungsbeispiels näher erläutert. Es zeigen:
- Figur 1:: eine Seitenansicht (linke Darstellung) und eine Fronteinsicht (rechte Darstellung) des erfindungsgemäßen Fahrwerksbeins aus Faserverbundwerkstoff bestehend aus Schalenkomponenten und einer zentralen Rohrstruktur,
- Figur 2:: eine schematische Darstellung des an einem Flugzeugrumpf angeordneten Fahrwerksbein gemäß Figur 1 mit dieses stützenden Strebe ,
- Figur 3:: Querschnittdarstellungen durch das Fahrwerksbein gemäß Figur 1, rechte Darstellung,
- Figur 4a, b:: Längsschnittdarstellungen durch das Fahrwerksbein in unterschiedlichen Ausgestaltungen gemäß Linie E-E in Figur 1, rechte Darstellung,
- Figur 5.: eine Längsschnittdarstellung eines Abschnittes des erfindungsgemäßen Fahrwerksbeins mit separat sowie integral gefertigtem Lenkungsgehäuse,
- Figur 6:: eine perspektivische Darstellung des erfindungsgemäßen Fahrwerksbeins mit angedeuteter Vorzugsorientierung der Verstärkungsfasern,
- Figur 7:: eine schematische Schnittansicht des Fahrwerksbeins gemäß Fig. 1 in einem geschlossenen Formwerkzeug,
- Figur 8:: eine schematische Schnittansicht des Fahrwerksbeins gemäß Fig. 1 in einem offenen Formwerkzeug,
- Figur 9:: eine Längsschnittansicht des Fahrwerksbeins gemäß Fig. 1 nach dessen Herstellung mit Darstellung der spannend zu bearbeitenden Randzonen,
- Figur 10:: eine detaillierte perspektivische Darstellung des erfindungsgemäßen Fahrwerksbeins mit separatem Lenkungsgehäuse,
- Figur 11:: eine perspektivische Darstellung der oberen, aus zwei Schalenstrukturen aufgebauten oberen Kniestrebe und
- Figur 12:: eine Längsschnittdarstellung durch die Kniestrebe gemäß Figur 11.

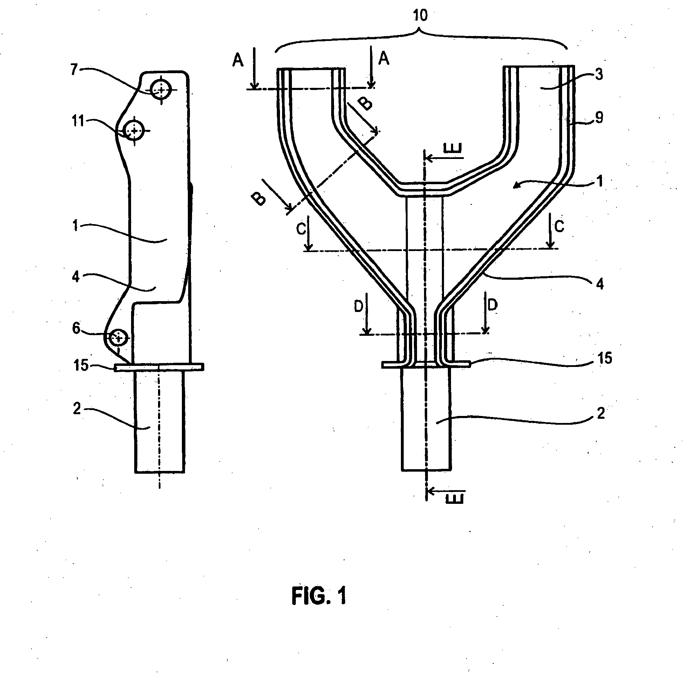

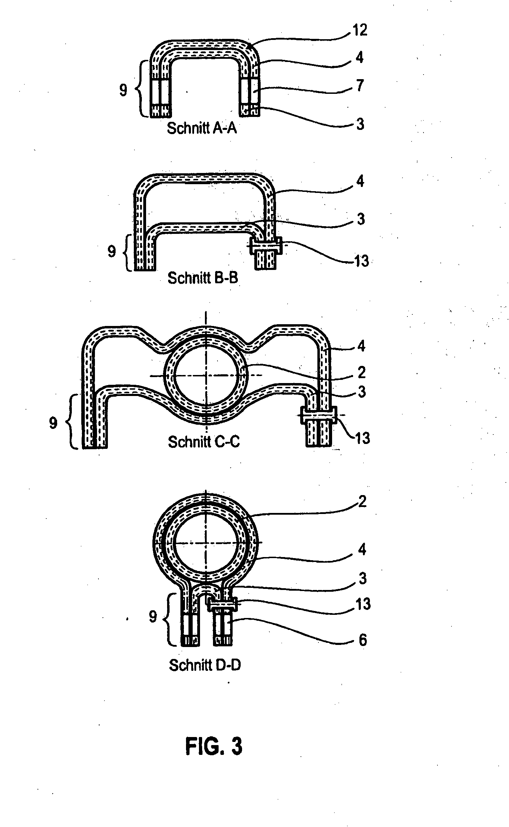

Figur 1, linke Darstellung zeigt in einer Seitenansicht das erfindungsgemäße Fahrwerksbein, das aus einem Faserverbundwerkstoff hergestellt ist. Das Fahrwerksbein 1 besteht aus einer zentralen Rohrstruktur 2 und zwei Schalenstrukturen 3, 4, von denen das Bezugszeichen 3 die Innenschale und das Bezugszeichen 4 die die Innenschale 3 umgebende Außenschale kennzeichnet. Die Schalenstrukturen 3, 4 bilden zusammen eine geschlossen Hohlstruktur, die die Rohrstruktur 2 einschließt, wie dies aus Figur 1 und insbesondere aus den Schnittdarstellungen gemäß Figur 3 hervorgeht.

Figur 1, rechte Darstellung zeigt die Anordnung in einer Frontansicht.

Die beiden Schalenstrukturen 3, 4 sind durch einen großflächigen Überlappungsbereich 9 fest miteinander verbunden und bilden eine lange Einspannung für die Rohrstruktur 2. In dem Überlappungsbereich 9 werden Bohrungen für die Aufnahme der Schwenklager 7 angeordnet, über die das Fahrwerksbein 1 schwenkbar an einer Rumpfstruktur eines Flugzeuges angeordnet ist. In dem Überlappungsbereich werden des Weiteren die Bohrungen für das Kniestrebenlager 6 angeordnet, über das das dargestellte Fahrwerksbein 1 mit einer Kniestrebe schwenkbar in Verbindung steht, die in ihrem anderen Endbereich schwenkbar an einer Rumpfstruktur eines Flugzeuges angelenkt ist. Im Überlappungsbereich ist des Weiteren eine Bohrung 11 vorgesehen, über die ein Betätigungszylinder mit dem Fahrwerksbein 1 verbindbar ist, über den das Fahrwerksbein 1 ein- und ausgefahren wird.

Wie dies des Weiteren aus Figur 1 hervorgeht, ist in die Außenschale 4 ein Montageflansch 15 als integrales Bauteil integriert, an dem ein in Figur 1 nicht dargestelltes Lenkungsgehäuse angeordnet werden kann.

In den Figuren sind gleiche oder funktionsgleiche Teile mit denselben Bezugszeichen dargestellt.

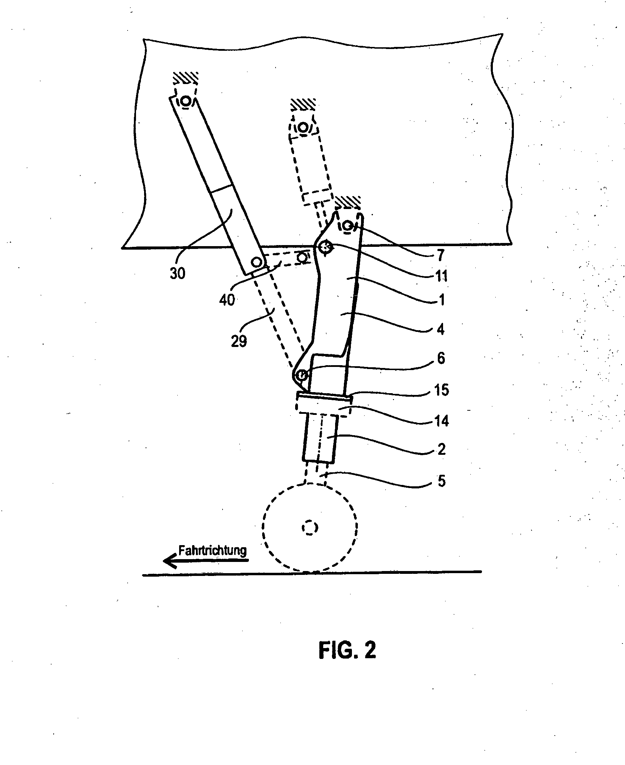

Figur 2 zeigt in schematischer Ansicht das Fahrwerksbein 1 gemäß Figur 1 sowie die Kniestrebe, die aus zwei Teilen, nämlich dem Teil 29 (untere Kniestrebe) und dem Teil 30 (obere Kniestrebe) besteht. Die obere Kniestrebe 30 besteht wie das Fahrwerksbein 1 aus einem Faserverbundwerkstoff. Wie dies des Weiteren aus Figur 2 hervorgeht, dient die Strebe 29, 30 zur Stabilisierung bzw. Abstützung des Fahrwerksbeins 1 in dessen ausgefahrenen Zustand.

Die Radlasten werden bei dem in Figur 1 dargestellten Bugfahrwerk wie bei allen betrachteten Fahrwerken über das Schubrohr 5 in das Fahrwerksbein eingeleitet. Das Schubrohr 5 ist in der zentralen Rohrstruktur 2 längsverschieblich aufgenommen. Beim Bugfahrwerk stützt die zweiteilige Kniestrebe 29, 30 das Fahrwerksbein 1 nach vorne gegen die Flugzeugstruktur ab.

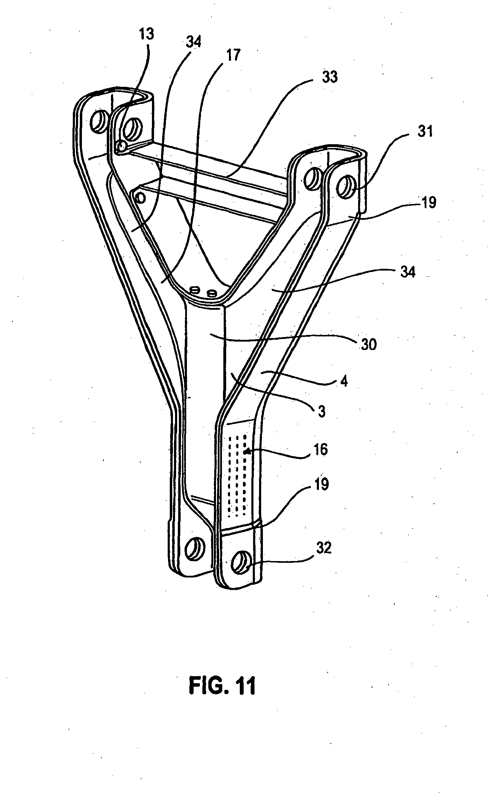

Wie bereits ausgeführt, ist das Fahrwerksbein 1 über die zwei Schwenklager 7 mit dem Schwenklagerabstand 10 und die obere Kniestrebe 30 über die zwei Schwenklager 31 (s. Figur 11) mit der Flugzeugstruktur schwenkbar verbunden, wie dies aus Figur 2 hervorgeht.

Über einen weiteren Hebelmechanismus 40 wird die gestreckte Kniestrebenanordnung 29, 30 im ausgefahrenen Zustand arretiert. Die weitere Hebelanordnung 40 erstreckt sich zwischen der gelenkigen Verbindung zwischen oberer und unterer Kniestrebe 29, 30 und dem Anlenkpunkt 11 des Betätigungszylinders an dem Fahrwerksbein 1.

Wie dies des Weiteren aus Figur 2 hervorgeht, ist für den Lenkantrieb bei dem hier dargestellten Bugfahrwerk ein Lenkungsgehäuse 14 vorgesehen, das mit einem Flansch 15 der Außenschale 4 des Fahrwerksbeins 1 in Verbindung steht.

In Figur 2 sind die aus einem Faserverbundwerkstoff bestehenden Teile des Fahrwerkes dunkel hinterlegt. Die untere Kniestrebe 29, das genannte Schubrohr 5 sowie der die gestreckte Kniestrebenanordnung 29, 30 arretierende Hebelmechanismus 40 bestehen aus Metall.

Figur 3 zeigt Schnittansichten gemäß der Schnittlinien A-A, B-B, C-C und D-D gemäß Figur 1, rechte Darstellung.

Wie dies aus Figur 3 hervorgeht, sind auf allen Schnitthöhen Überlappungsbereiche 9 vorgesehen, in denen die Innenstruktur und die Außenstruktur, d. h. beide Schalenstrukturen 3, 4 flächig aneinander liegen.

Hier ergibt sich demzufolge eine doppelte Wandstärke. In diesen Bereichen werden die Bohrungen für alle hochbelasteten Lenklager 6, 7 angeordnet.

Wie dies aus Figur 3, Schnitt B-B, Schnitt C-C und Schnitt D-D des Weiteren hervorgeht, sind metallische Verbindungselemente 13 in Form von Bolzen oder Nieten vorgesehen, die zum festen, formschlüssigen Fügen der beiden Schalenstrukturen 3, 4 und/oder Schälsicherung zur Unterstützung einer stoffschlüssigen Verbindung dienen.

Die Schnittdarstellungen B-B und Schnitt C-C zeigen die Ausbildung einer biege- und korrisionssteifen Hohlstruktur durch die Schalenbauteile 3, 4, in der die zentrale Rohrstruktur 2 fest angeordnet ist.

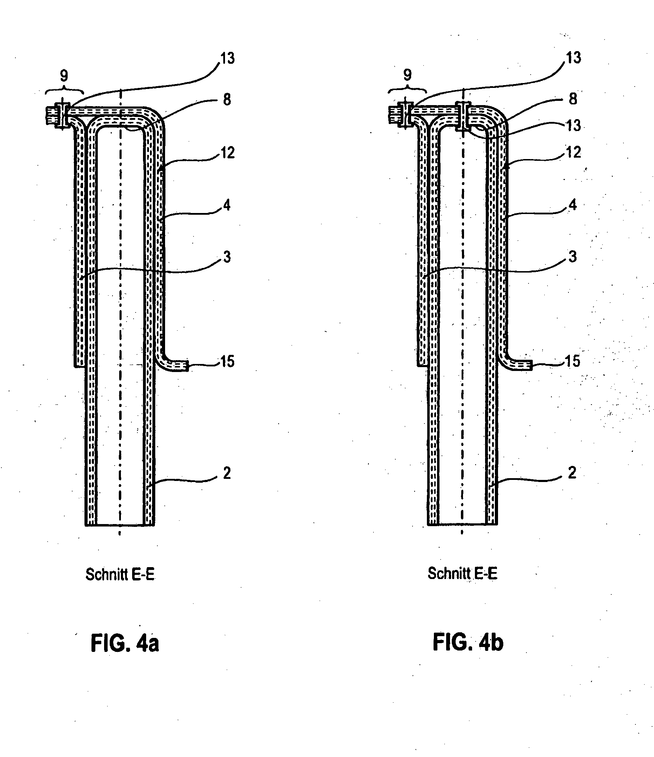

Figur 4a zeigt einen Längsschnitt durch das Fahrwerksbein 1 gemäß Figur 1, rechte Darstellung entsprechend der Schnittlinie E-E. Aus dieser Abbildung geht die von der Innenschale 3 und Außenschale 4 auf großer Länge eingespannte zylindrische Rohrstruktur 2 hervor, die am oberen Ende 8 geschlossen ist und somit Axialkräfte des Feder-Dämpfer-System formschlüssig aufnehmen kann. Mit dem Bezugszeichen 12 ist eine textile Verstärkung dargestellt.

Auch aus dieser Darstellung gemäß Figur 4a ergibt sich eine Verbindung von Innen- und Außenschale 3, 4 durch einen vorgespannten Metallbolzen 13. Figur 4b zeigt eine Figur 4a entsprechende Anordnung bei der ein weiterer vorgespannter Metallbolzen 13 das obere geschlossene Ende 8 des Rohres 2 mit der Außenschale 4 verbindet.

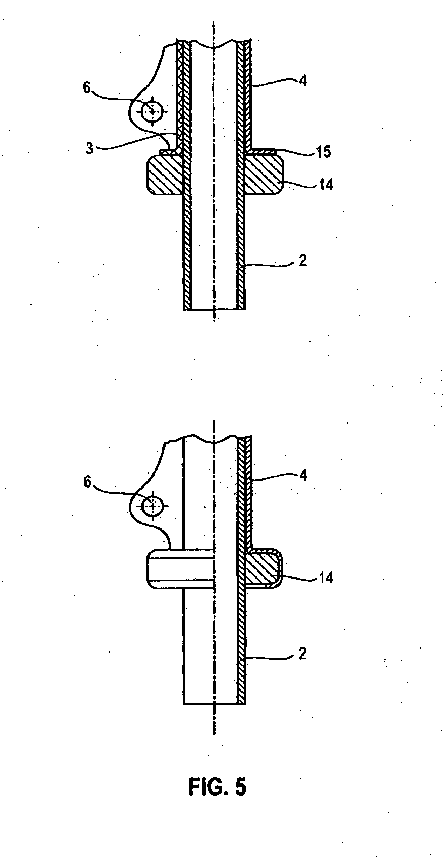

Mit dem Bezugszeichen 15 in Figur 4a, b ist der integrierte Flansch angedeutet, mittels dessen das Lenkungsgehäuse 14 fixiert wird, wie dies des Näheren noch aus Figur 5 hervorgeht.

Figur 5 zeigt in seiner oberen Darstellung eine erste Möglichkeit der Anbringung des Lenkungsgehäuses 14 bei Bugfahrwerken. Es ist in diesem Falle als separate Komponente gefertigt und an einem in die Außenschale 4 integrierten Flansch 15 montiert. Auch ist es denkbar, das Lenkungsgehäuse 14 in die Außenschale zu integrieren, wie dies aus Figur 5, untere Darstellung hervorgeht.

Durch die Integration werden weitere Gewichtseinsparungen erzielt, wobei sich allerdings der Aufwand für Werkzeugbau und Faserverbundfertigung vergrößert.

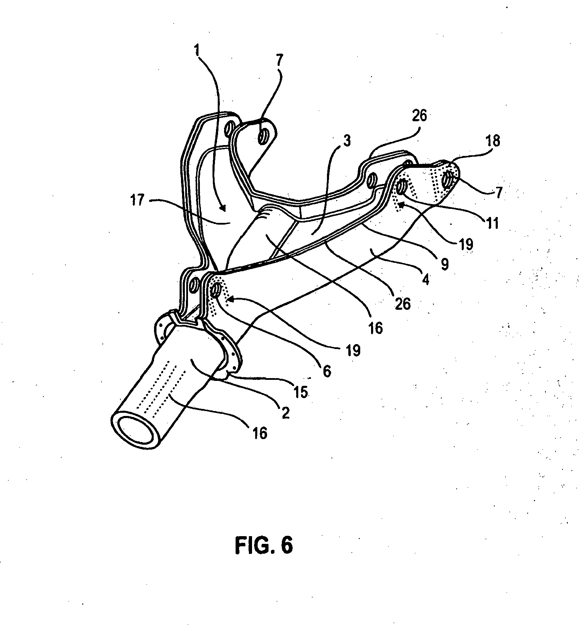

Figur 6 zeigt das erfindungsgemäße Fahrwerksbein in einer perspektivischen Darstellung. Durch die Bezugszeichen 16 und 17 sind Faserverstärkungen mit beanspruchungsgerechter Faserorientierung angedeutet. Da das Fahrwerksbein 1 im Wesentlichen einer globalen Biegebeanspruchung ausgesetzt ist, werden die Verstärkungsfasern zur Erlangung eines hohen Leichtbaugrades etwa parallel zur Rohrachse (16) sowie auf direktem Weg zwischen den Lasteinleitungspunkten (17) angeordnet.

Wie dies des Weiteren aus Figur 6 hervorgeht, ist in der Umgebung hochbelasteter Bolzenverbindungen zur Gewährleistung einer hohen Lochlaibungsfestigkeit ein quasi isotroper Lagenaufbau 18 von Vorteil.

Sind Bolzenlöcher vorgesehen, die einen geringen Abstand zum Bauteilrand aufweisen, können ertragbare Lagerkräfte mit lokalen Schlaufenanordnungen 19 gesteigert werden. Das Bezugszeichen 26 zeigt spanend bearbeitete Bauteilkanten.

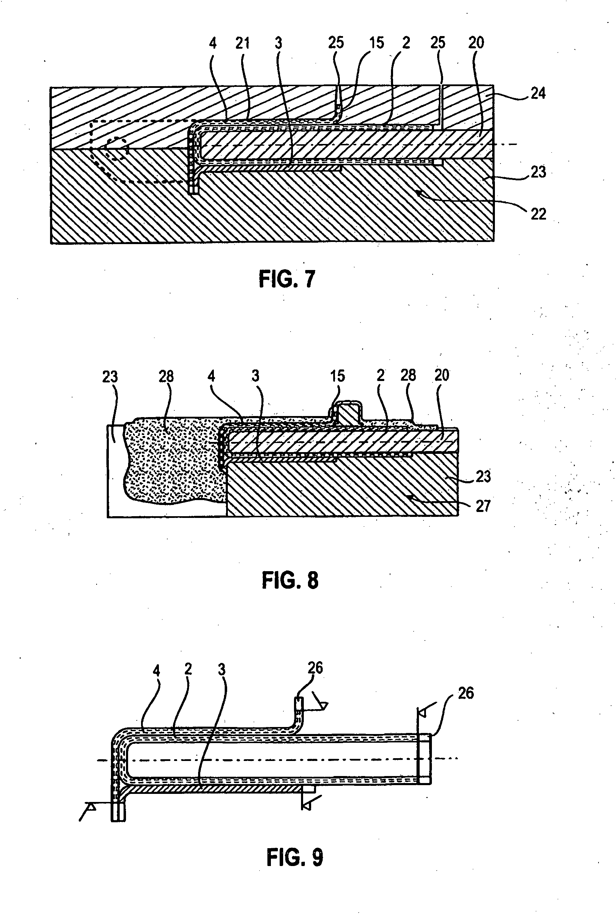

Figur 7 zeigt in schematischer Schnittdarstellung eine Anordnung zur Fertigung eines Fahrwerksbeins im Resin-Transfer-Moulding RTM - Verfahren. Das Formwerkzeug 22 besteht gemäß Figur 7 aus einem Oberwerkzeug 24 und einem Unterwerkzeug 23 sowie aus einem Kern 20, der zwischen beide Werkzeuge 23, 24 eingelegt ist. Der Kern dient der Formgebung der zentralen Rohrstruktur 2. Zur Definition des Abstandes von Außen- und Innenschale 3, 4 werden Kerne 20 aus Strukturschaum oder auswaschbare Kerne eingelegt. Im Anschluß daran werden die Verstärkungshalbzeuge für die Außenschale 4 im Werkzeug ausgerichtet. Sodann erfolgt der vakuumdichte Verschluß und die Evakuierung des Formwerkzeugs für die Konsolidierung des noch trockenen Faseraufbaus zwischen Ober- und Unterwerkzeug 23, 24. Nach dem Evakuieren wird über ein System von Angusskanälen 25 Reaktionsharz injiziert. Eine Temperierung des Werkzeuges ermöglicht die Einstellung einer günstigen Viskosität sowie die Abfuhr von Reaktionswärme.

Beim RTM-Verfahren werden somit die im Werkzeug eingeschlossenen textilen Verstärkungshalbzeuge und Preforms 21 nach dem Evakuieren der Luft über ein Angusssystem 25 mit Reaktionsharz infiltriert.

Figur 8 zeigt eine Anordnung zur Herstellung des Fahrwerksbeins in einem offenen Formwerkzeugsystem 27. Hierbei wird das Oberwerkzeug 24 durch eine Vakuumfolie 28 ersetzt. Bei diesem Verfahren erfolgt die Verdichtung des Laminats durch Erhöhung des Prozessdruckes, etwa in einem Autoklaven, wodurch höhere Faservolumenanteile erzielt werden können. Bei einem solchen Werkzeugssystem gemäß Figur 8 ist sowohl die Verarbeitung trockener als auch vorimprägnierter Faserzuschnitte möglich.

Nach der Konsolidierung wird das Bauteil entformt und im Bereich der Lageraugen spannend endbearbeitet.

Figur 9 zeigt die Kontur des Bauteils vor und nach der spannenden Berandung anhand eines Längsschnittes.

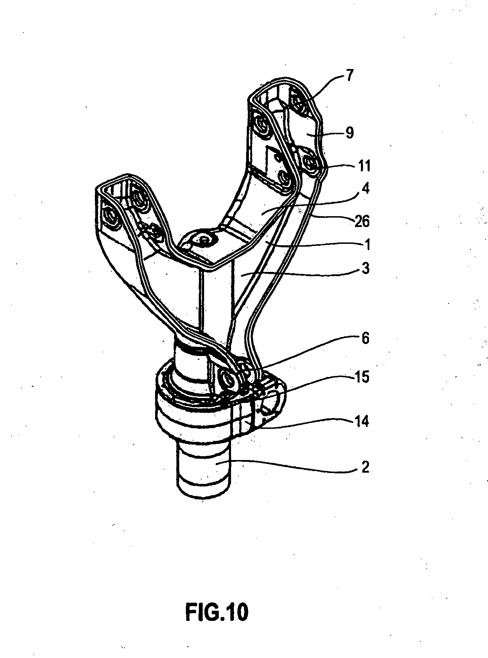

Figur 10 zeigt nochmals das erfindungsgemäße Fahrwerkbein 1 in einer perspektivischen Darstellung mit separatem und an dem Flansch 15 fixierten Lenkungsgehäuse 14.

Figur 11 zeigt in einer perspektivischen Darstellung die erfindungsgemäße obere Kniestrebe 30. Anhand der Figuren 1, rechte Darstellung und Figur 11 wird die Ähnlichkeit der äußeren Gestalt mit dem Fahrwerksbein deutlich.

Die obere Kniestrebe 30 besteht ebenfalls aus zwei Schalenstrukturen 3, 4, die eine biegesteife Hohlstruktur bilden und die wie das Fahrwerksbein in einem großflächigen Überlappungsbereich 9 fest miteinander verbunden sind.

Die obere Kniestrebe 30 ist Y-förmig ausgeführt und weist zwei Äste 34 auf, in deren Endbereiche Schwenklager 31 zur schwenkbaren Anordnung der oberen Kniestrebe an einer Rumpfstruktur eines Flugzeuges vorgesehen sind. Die Äste sind etwas unterhalb der Lager 31 durch eine Strebe 33 miteinander verbunden. Diese Strebe bzw. der Steg wird als U-Profil von der Außenschale 4 gebildet und verhindert ein seitliches Ausweichen der Äste 34 bei Zug- und Druckbelastung.

Auch hier kann vorgesehen sein, dass die Verbindungsfestigkeit zwischen den Schalenkomponenten 3, 4 durch lokale metallische Verbindungselemente 13 nochmals erhöht wird. Wie auch beim Fahrwerksbein 1 dienen die metallischen Verbindungselemente auch als Schälsicherung durch Unterstützung einer formschlüssigen Verbindung.

Zur Übertragung höchster Lochlaibungskräfte werden die Lageraugen im Überlappungsbereich 9 der Schalenstrukturen angeordnet, wie dies auch bei dem Fahrwerksbein 1 der Fall ist. Da die Strebenkomponente 30 vorrangig in Längsrichtung beansprucht wird, ist die Anordnung der Verstärkungsfasern in Längsrichtung bzw. auf kurzem und direktem Weg zwischen den Lasteinleitungspunkten von Vorteil. Die Vorzugsrichtung ist in Figur 11 mit den Bezugszeichen 16, 17 angedeutet. Das Bezugszeichen 19 kennzeichnet die lokale Faserverstärkung mit Schlaufenanordnung.

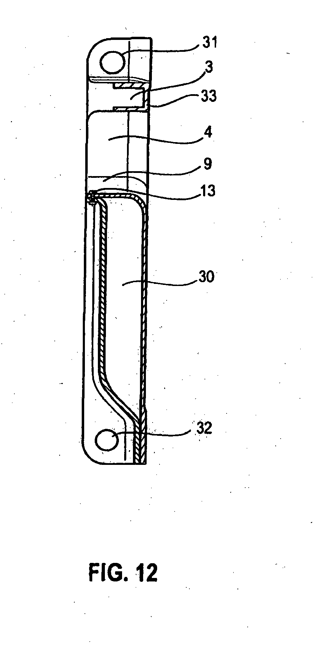

Figur 12 zeigt die Strebe gemäß Figur 11 in einer Längsschnittansicht. Aus dieser Figur wird nochmals die Anordnung der Schwenklager 31 zur schwenkbaren Anordnung der oberen Kniestrebe 30 an einer Rumpfstruktur eines Flugzeuges und die Lagerbohrung 32 zur Verbindung mit der unteren Kniestrebe deutlich, die vorzugsweise aus Metall besteht und die die Verbindung zwischen oberer Kniestrebe 30 und dem Fahrwerksbein 1 herstellt.

Aus Figur 12 wird des Weiteren deutlich, dass die beiden Schalenstrukturen 3, 4 eine biegesteife Hohlstruktur ausbilden. Im Bereich der Lageraugen 32 werden die Schalen zusammengeführt, um ausreichenden Bauraum für die Gelenklager freizugeben.

Folgende Vorteile des erfindungsgemäßen Flugzeugfahrwerks können exemplarisch genannt werden:
- erhebliche Gewichtseinsparung gegenüber klassischen metallischen Bauweisen durch Einsatz von Hochleistungsverbundwerkstoffen wie etwa Kohlenstofffaser verstärktem Kunststoff,
- hohe Ermüdungsfestigkeit und gutmütiges Versagensverhalten bei Überlastung, Vermeiden von Rissausbreitung durch textile Verstärkungen mit Riß-Stopper-Eigenschaften
- gute Korrosionsbeständigkeit des Faserverbundwerkstoffs
- hohe herstellungstechnische Reproduzierbarkeit durch einfache, werkstoffgerechte Gestaltung der einzelnen Schalen und rohrförmigen Faserverbundstrukturen
- Kosteneinsparungen durch stückzahlabhängige Anpassung von Fertigungs- und Montagevorgängen, geringe Investitionskosten, insbesondere bei Kleinserienfertigung.

## Patentansprüche

1. Flugzeugfahrwerk mit einem Fahrwerksbein (1), wobei das Fahrwerksbein (1) oder ein oder mehrere Teile des Fahrwerkbeins (1) teilweise oder vollständig aus einem Faserverbundwerkstoff bestehen, **dadurch gekennzeichnet, dass** das Fahrwerksbein (1) oder ein oder mehrere Teile des Fahrwerkbeins (1) wenigstens zwei miteinander verbundene Schalenstrukturen (3, 4) aus einem Faserverbundwerkstoff aufweisen.

2. Flugzeugfahrwerk nach Anspruch 1, **gekennzeichnet durch** eine mit dem Fahrwerksbein (1) in Verbindung stehende Strebe (29, 30), die das Fahrwerksbein (1) in dessen ausgefahrenem Zustand abstützt, wobei die Strebe (29, 30) oder ein oder mehrere Teile (30) der Strebe (29, 30) teilweise oder vollständig aus einem Faserverbundwerkstoff bestehen.

3. Flugzeugfahrwerk nach Anspruch 2, **dadurch gekennzeichnet, dass** die Strebe (29, 30) aus wenigstens zwei zueinander verschwenkbaren Teilen (29, 30) besteht, von denen eines (30) an dem Fahrwerksbein (1) befestigt ist und das andere (29) am Flugzeugrumpf fixierbar ist, wobei das am Flugzeugrumpf fixierbare Teil (29) teilweise oder vollständig aus einem Faserverbundwerkstoff besteht oder einen Faserverbundwerkstoff aufweist.

4. Flugzeugfahrwerk nach einem der Ansprüche 2 oder 3, **dadurch gekennzeichnet, dass** die Strebe (29, 30) und/oder ein oder mehrere Teile der Strebe (29, 30) wenigstens zwei miteinander verbundene Schalenstrukturen (3, 4) aus einem Faserverbundwerkstoff aufweisen.

5. Flugzeugfahrwerk nach einem der vorhergehenden Ansprüche, **dadurch gekennzeichnet, dass** das Fahrwerksbein (1) wenigstens eine Rohrstruktur (2) zur Aufnahme eines Feder-Dämpfer-Systems und/oder eines Schubrohres (5) aufweist, an dem die Radachsenbaugruppe angeordnet ist.

6. Flugzeugfahrwerk nach Anspruch 5, **dadurch gekennzeichnet, dass** die Schalenstrukturen (3, 4) mit der Rohrstruktur (2) in Verbindung stehen und vorzugsweise eine Hohlstruktur ausbilden, in der die Rohrstruktur (2) angeordnet ist.

7. Flugzeugfahrwerk nach Anspruch 6, **dadurch gekennzeichnet, dass** die Schalenstrukturen (3, 4) und die Rohrstruktur (2) eine strukturelle Einheit bilden.

8. Flugzeugfahrwerk nach einem der vorhergehenden Ansprüche, **dadurch gekennzeichnet, dass** das Fahrwerksbein (1) eine oder mehrere Lagerstellen (6, 7) aufweist, mittels derer das Fahrwerksbein (1) an einer Rumpfstruktur eines Flugzeuges und/oder an einer das Fahrwerksbein (1) stützenden Strebe (29, 30) und/oder an einer Betätigungseinheit (11) zum Verfahren des Fahrwerkbeins (1) fixierbar ist.

9. Flugzeugfahrwerk nach einem der Ansprüche 2 bis 4, **dadurch gekennzeichnet, dass** die Strebe (29, 30) eine oder mehrere Lagerstellen (31, 32) aufweist, mittels derer die Strebe (29, 30) an einer Rumpfstruktur eines Flugzeuges und/oder an dem Fahrwerksbein (1) oder an einer weiteren Strebe (29) fixierbar ist und/oder mittels derer zwei Teile der Strebe (29, 30) miteinander in Verbindung stehen.

10. Flugzeugfahrwerk nach einem der Ansprüche 1 bis 9, **dadurch gekennzeichnet, dass** sich die Schalenstrukturen (3, 4) wenigstens teilweise, vorzugsweise in den Randbereichen unter Ausbildung eines oder mehrerer Überlappungsbereiche flächig überlappen.

11. Flugzeugfahrwerk nach Anspruch 8 oder 9 sowie nach Anspruch 10, **dadurch gekennzeichnet, dass** eine, mehrere oder alle der Lagerstellen (6, 7, 31, 32) in dem oder den Überlappungsbereichen angeordnet sind.

12. Flugzeugfahrwerk nach einem der vorhergehenden Ansprüche, **dadurch gekennzeichnet, dass** ein Lenkungsgehäuse (14) vorgesehen ist, das an dem Fahrwerksbein (1) als separates Teil angeordnet oder in dieses integriert ist.

13. Flugzeugfahrwerk nach einem der Ansprüche 1 bis 11 und nach Anspruch 12, **dadurch gekennzeichnet, dass** das Lenkungsgehäuse an einem Flansch (15) befestigt ist, der einen integralen Bestandteil einer der Schalenstrukturen (4,5) bildet.

14. Flugzeugfahrwerk nach einem der Ansprüche 2 bis 4 oder nach Anspruch 9, **dadurch gekennzeichnet, dass** die Strebe (29, 30) oder ein Teil (30) der Strebe (29, 30) eine Y-förmig verzweigte Grundstruktur aufweist, in deren Ästen (34) Lagerstellen (31, 32) zur Fixierung der Strebe (29, 30) an einer Rumpfstruktur eines Flugzeuges vorgesehen sind.

15. Flugzeugfahrwerk nach Anspruch 14, **dadurch gekennzeichnet, dass** wenigstens ein Steg (33) vorgesehen ist, der sich zwischen den Ästen (34) der Y-förmig verzweigten Grundstruktur erstreckt.

16. Flugzeugfahrwerk nach einem der vorhergehenden Ansprüche, **dadurch gekennzeichnet, dass** der Faserverhundwerkstoff lange oder endlos verlaufende Verstärkungsfasern (16, 17), wie Glasfasern, Aramidfasern oder Kohlenstofffasern aufweist.

17. Flugzeugfahrwerk nach Anspruch 16, **dadurch gekennzeichnet, dass** die Fasern in eine Matrix, insbesondere in eine Matrix aus oder mit einem duroplastischen oder thermoplastischen Material eingebettet sind.

18. Flugzeugfahrwerk nach einem der vorhergehenden Ansprüche, **dadurch gekennzeichnet, dass** der Faserverbundwerkstoff mehrere geschichtete textile Flächenhalbzeuge (12), insbesondere Gewebe, Gelege oder Gestricke aufweist.

19. Flugzeugfahrwerk nach einem der Ansprüche 10 bis 18, **dadurch gekennzeichnet, dass** die Überlappungsbereiche durch Verbindungselemente (13), insbesondere durch vorgespannte metallische Verbindungselemente (13) verbunden werden.

20. Flugzeugfahrwerk nach Anspruch 19, **dadurch gekennzeichnet, dass** die Verbindungselemente am oberen und unteren Einspannbereich der zentralen Rohrstruktur (2) gemäß Anspruch 5 und/oder im Bereich der Lagerstellen (6, 7, 31, 32) angeordnet sind, mittels derer das Fahrwerksbein (1) und/oder die Strebe (30) gemäß Anspruch 2 an einer Rumpfstruktur eines Flugzeuges fixiert ist.

21. Flugzeugfahrwerk nach einem der Ansprüche 16 bis 20, **dadurch gekennzeichnet, dass** wenigstens ein Teil der Vestärkungsfasern (16, 17) in etwa parallel zur Achse der Rohrstruktur (2) und/oder parallel auf dem Weg zwischen Lasteinleitungspunkten verlaufen.

22. Flugzeugfahrwerk nach einem der Ansprüche 16 bis 21, **dadurch gekennzeichnet, dass** wenigstens im Bereich einer der Lagerstellen (3, 4, 31, 32) und/oder im Bereich der Verzweigung der Y-förmig aufgebauten Strebe (29, 30) ein isotroper Aufbau oder eine lokale Aufdickung des Faserverbundwerkstoffes vorliegt.

23. Flugzeugfahrwerk nach einem der vorhergehenden Ansprüche, **dadurch gekennzeichnet, dass** die Bestandteile des Fahrwerksbeins (1) und/oder der Strebe (29, 30) gemäß Anspruch 2 durch eine Verbindungstechnik, insbesondere durch Kleben oder Nieten, aneinander gefügt sind oder in einem Fertigungsschritt gemeinsam hergestellt sind.

24. Verfahren zur Herstellung eines Fahrwerksbeins (1) und/oder einer Strebe (29, 30) eines Fahrwerkbeins (1) und/oder eines oder mehrerer Teile einer Strebe (29, 30) und/oder eines Fahrwerkbeins (1) eines Flugzeugfahrwerks nach einem der Ansprüche 1 bis 23, **dadurch gekennzeichnet, dass** die Herstellung durch das Verfahren des Resin-Transfer-Moulding erfolgt.

25. Verfahren nach Anspruch 24, **dadurch gekennzeichnet, dass** zunächst trockene oder vorkonsolidierte Verstärkungshalbzeuge oder Preforms in einem Formwerkzeug positioniert werden, dass sodann evakuiert wird und dass schließlich Reaktionsharz in das Formwerkzeug eingepresst wird.

26. Verfahren nach Anspruch 24 oder 25, **dadurch gekennzeichnet, dass** das Fasermaterial der Rohrstruktur (2) zunächst auf einem Kern wickeltechnisch abgelegt wird.

27. Verfahren nach einem der Ansprüche 24 bis 26, **dadurch gekennzeichnet, dass** das Fahrwerkbein (1) nach einem der Ansprüche 5 bis 23 ausgeführt ist und dass zunächst der Faserzuschnitt (21) für eine Schalenstruktur (3) auf dem Unterwerkzeug (23) abgelegt wird, dass dann ein mit dem Fasermaterial für die Rohrstruktur (2) versehener Wickelkern (20) in dem Formwerkzeug positioniert wird, und dass sodann der Faserzuschnitt für die weitere Schalenstruktur (4) angeordnet wird.

28. Verfahren nach Anspruch 27, **dadurch gekennzeichnet, dass** das Fasermaterial für die Rohrstruktur (2) vor dem Einbringen in das Formwerkzeug und vorzugsweise bereits bei der wickeltechnischen Ablage des Fasermaterials auf einem Kern (20) mit Harz getränkt wird.

29. Verfahren nach einem der Ansprüche 24 bis 28, **dadurch gekennzeichnet, dass** das Formwerkzeug ein Unter- und ein Oberwerkzeug oder ein Unterwerkzeug und eine Vakuumfolie aufweist.

## Claims

1. An aircraft landing gear comprising a landing gear leg (1), wherein the landing gear leg (1) or one or more parts of the landing gear leg (1) consist partly or completely of a fiber composite material, **characterized in that** the landing gear leg (1) or one or more parts of the landing gear leg (1) comprise at least two mutually connected shell structures (3, 4) of a fiber composite material.

2. An aircraft landing gear in accordance with claim 1, **characterized by** a brace (29, 30) which is connected to the landing gear leg (1) and which supports the landing gear leg (1) in its extended state, wherein the brace (29, 30) or one or more parts (30) of the brace (29, 30) consist partly or completely of a fiber composite material.

3. An aircraft landing gear in accordance with claim 2, **characterized in that** the brace (29, 30) consists of at least two mutually pivotable parts (29, 30) of which one (30) is fastened to the landing gear leg (1) and the other (29) can be fixed to the aircraft fuselage, with the part (29) fixable to the aircraft fuselage consisting partly or completely of a fiber composite material or comprising a fiber composite material.

4. An aircraft landing gear in accordance with either of claims 2 or 3, **characterized in that** the brace (29, 30) and/or one or more parts of the brace (29, 30) comprise at least two mutually connected shell structures (3, 4) of a fiber composite material.

5. An aircraft landing gear in accordance with one of the preceding claims, **characterized in that** the landing gear leg (1) has at least one tube structure (2) for the reception of a spring-damper system and/or of a thrust tube (5) at which the wheel axle assembly is arranged.

6. An aircraft landing gear in accordance with claim 5, **characterized in that** the shell structures (3, 4) are connected to the tube structure (2) and preferably form a hollow structure in which the tube structure (2) is arranged.

7. An aircraft landing gear in accordance with claim 6, **characterized in that** the shell structures (3, 4) and the tube structure (2) form a structural unit.

8. An aircraft landing gear in accordance with one of the preceding claims, **characterized in that** the landing gear leg (1) has one or more support points (6, 7) by means of which the landing gear leg (1) can be fixed to a fuselage structure of an aircraft and/or to a brace (29, 30) supporting the landing gear leg (1) and/or to an actuation unit (11) for the moving of the landing gear leg (1).

9. An aircraft landing gear in accordance with one of the claims 2 to 4, **characterized in that** the brace (29, 30) has one or more support points (31, 32) by means of which the brace (29, 30) can be fixed to a fuselage structure of an aircraft and/or to the landing gear leg (1) or to a further brace (29) and/or by means of which two parts of the brace (29, 30) are connected to one another.

10. An aircraft landing gear in accordance with one of the claims 1 to 9, **characterized in that** the shell structures (3, 4) overlap areally at least in part, preferably in the marginal regions while forming one or more overlap regions.

11. An aircraft landing gear in accordance with either of claims 8 or 9, **characterized in that** one, more or all the support points (6, 7, 31, 32) are arranged in the overlap region or regions.

12. An aircraft landing gear in accordance with one of the preceding claims, **characterized in that** a steering housing (14) is provided which is arranged at the landing gear leg (1) as a separate part or is integrated therein.

13. An aircraft landing gear in accordance with one of the claims 1 to 11 and in accordance with claim 12, **characterized in that** the steering housing is fastened to a flange (15) which forms an integral component of one of the shell structures (4, 5).

14. An aircraft landing gear in accordance with one of the claims 2 to 4 or in accordance with claim 9, **characterized in that** the brace (29, 30) or a part (30) of the brace (29, 30) has a basic structure which is branched in a Y shape and in whose branches (34) support points (31, 32) for the fixing of the brace (29, 30) to a fuselage structure of an aircraft are provided.

15. An aircraft landing gear in accordance with claim 14, **characterized in that** at least one web (33) is provided which extends between the branches (34) of the base structure branched in a Y shape.

16. An aircraft landing gear in accordance with one of the preceding claims, **characterized in that** the fiber composite material has long or endlessly extending reinforcement fibers (16, 17) such as glass fibers, aramide fibers or carbon fibers.

17. An aircraft landing gear in accordance with claim 16, **characterized in that** the fibers are embedded into a matrix, in particular into a matrix consisting of or comprising a thermosetting or thermoplastic material.

18. An aircraft landing gear in accordance with one of the preceding claims, **characterized in that** the fiber composite material has a plurality of layered textile areal semi-finished products (12), in particular woven fabrics, fabrics or knitted fabrics.

19. An aircraft landing gear in accordance with one of the claims 10 to 18, **characterized in that** the overlap regions are connected by connection elements (13), in particular by biased metallic connection elements (13).

20. An aircraft landing gear in accordance with claim 19, **characterized in that** the connection elements are arranged at the upper and lower clamping regions of the central tube structure (2) in accordance with claim 5 and/or in the region of the support points (6, 7, 31, 32), by means of which the landing gear leg (1) and/or the brace (30) in accordance with claim 2 is fixed to a fuselage structure of an aircraft.

21. An aircraft landing gear in accordance with one of the claims 16 to 20, **characterized in that** at least some of the reinforcement fibers (16, 17) extend approximately parallel to the axis of the tube structure (2) and/or parallel on the path between load introduction points.

22. An aircraft landing gear in accordance with one of the claims 16 to 21, **characterized in that** an isotropic design or a local thickening of the fiber composite material is present at least in the region of one of the support points (3, 4, 31, 32) and/or in the region of the branching of the brace (29, 30) made in a Y shape.

23. An aircraft landing gear in accordance with one of the preceding claims, **characterized in that** the components of the landing gear leg (1) and/or of the brace (29, 30) in accordance with claim 2 are joined to one another by a connection technique, in particular by adhesive bonding or riveting, or are manufactured together in a production step.

24. A method for the manufacture of a landing gear leg (1) and/or of a brace (29 30) of a landing gear leg (1) and/or of one or more parts of a brace (29, 30) and/or of a landing gear leg (1) of an aircraft landing gear in accordance with one of the claims 1 to 23, **characterized in that** the manufacturing takes place by the method of resin transfer molding.

25. A method in accordance with claim 24, **characterized in that** dry or preconsolidated semi-finished reinforcement products or preforms are first positioned in a molding tool which is then evacuated; and **in that** subsequently reaction resin is pressed into the molding tool.

26. A method in accordance with claim 24 or 25, **characterized in that** the fiber material of the tube structure (2) is first placed on a core in a technical winding manner.

27. A method in accordance with any one of the claims 24 to 26, **characterized in that** the landing gear leg (1) is designed in accordance with one of the claims 5 to 23; and **in that** the tailored fiber (21) for a shell structure (3) is first placed on the lower tool (23); **in that** a winding core (20) provided with the fiber material for the tube structure (2) is then positioned in the molding tool; and **in that** then the tailored fiber for the further shell structure (4) is positioned.

28. A method in accordance with claim 27, **characterized in that** the fiber material for the tube structure (2) is impregnated with resin before the introduction into the molding tool and preferably already on the technical winding placement of the fiber material on a core (20).

29. A method in accordance with any one of the claims 24 to 28, **characterized in that** the molding tool comprises a lower tool and an upper tool or a lower tool and a vacuum foil.

## Revendications

1. Train d'atterrissage d'avion comprenant une jambe de train d'atterrissage (1), la jambe de train d'atterrissage (1) ou une ou plusieurs pièces de la jambe de train d'atterrissage (1) étant composées en partie ou entièrement d'un matériau composite renforcé par des fibres, **caractérisé en ce que** la jambe de train d'atterrissage (1) ou une ou plusieurs pièces de la jambe de train d'atterrissage (1) comportent au moins deux structures de coque (3, 4) reliées l'une à l'autre en un matériau composite renforcé par des fibres.

2. Train d'atterrissage d'avion selon la revendication 1, **caractérisé par** une entretoise (29, 30) qui est en liaison avec la jambe de train d'atterrissage (1), qui soutient la jambe de train d'atterrissage (1) dans son état déployé, l'entretoise (29, 30) ou une ou plusieurs pièces (30) de l'entretoise (29, 30) étant composées en partie ou entièrement d'un matériau composite renforcé par des fibres.

3. Train d'atterrissage d'avion selon la revendication 2, **caractérisé en ce que** l'entretoise (29, 30) est composée d'au moins deux pièces (29, 30) pivotantes l'une par rapport à l'autre, dont une (30) est fixée sur la jambe de train d'atterrissage (1) et l'autre (29) peut être fixée sur le fuselage, la pièce (29) pouvant être fixée sur le fuselage étant composée en partie ou entièrement d'un matériau composite renforcé par des fibres ou comportant un matériau composite renforcé par des fibres.

4. Train d'atterrissage d'avion selon l'une des revendications 2 ou 3, **caractérisé en ce que** l'entretoise (29, 30) et/ou une ou plusieurs pièces de l'entretoise (29, 30) comportent au moins deux structures de coque (3, 4) reliées l'une à l'autre en matériau composite renforcé par des fibres.

5. Train d'atterrissage d'avion selon l'une des revendications précédentes, **caractérisé en ce que** la jambe de train d'atterrissage (1) comporte au moins une structure tubulaire (2) destinée à recevoir un système ressort-amortisseur et/ou un tube télescopique (5), sur lequel est disposé l'ensemble essieu.

6. Train d'atterrissage d'avion selon la revendication 5, **caractérisé en ce que** les structures de coque (3, 4) sont en liaison avec la structure tubulaire (2) et forment de préférence une structure creuse, dans laquelle la structure tubulaire (2) est disposée.

7. Train d'atterrissage d'avion selon la revendication 6, **caractérisé en ce que** les structures de coque (3, 4) et la structure tubulaire (2) forment une unité structurelle.

8. Train d'atterrissage d'avion selon l'une des revendications précédentes, **caractérisé en ce que** la jambe de train d'atterrissage (1) comporte un ou plusieurs points d'appui (6, 7), au moyen desquels la jambe de train d'atterrissage (1) peut être fixée sur une structure de fuselage d'un avion et/ou sur une entretoise (29, 30) soutenant la jambe de train d'atterrissage (1) et/ou sur une unité d'actionnement (11) destinée à déplacer la jambe de train d'atterrissage (1).

9. Train d'atterrissage d'avion selon l'une des revendications 2 à 4, **caractérisé en ce que** l'entretoise (29, 30) comporte un ou plusieurs points d'appui (31, 32), au moyen desquels l'entretoise (29, 30) peut être fixée sur une structure de fuselage d'un avion et/ou sur la jambe de train d'atterrissage (1) ou sur une autre entretoise (29) et/ou au moyen desquels deux pièces de l'entretoise (29, 30) sont reliées l'une à l'autre.

10. Train d'atterrissage d'avion selon l'une des revendications 1 à 9, **caractérisé en ce que** les structures de coque (3, 4) se chevauchent de manière plane au moins en partie, de préférence dans les zones de bord en formant une ou plusieurs zones de chevauchement.

11. Train d'atterrissage d'avion selon la revendication 8 ou 9 ainsi que la revendication 10, **caractérisé en ce qu'**un, plusieurs ou tous les points d'appui (6, 7, 31, 32) sont disposés dans la ou les zones de chevauchement.

12. Train d'atterrissage d'avion selon l'une des revendications précédentes, **caractérisé en ce qu'**un boîtier de direction (14) est prévu, qui est disposé en tant que pièce séparée sur la jambe de train d'atterrissage (1) ou intégrée dans celle-ci.

13. Train d'atterrissage d'avion selon l'une des revendications 1 à 11 et selon la revendication 12, **caractérisé en ce que** le boîtier de direction est fixé sur une bride (15) qui forme une partie intégrante de l'une des structures de coque (4, 5).

14. Train d'atterrissage d'avion selon l'une des revendications 2 à 4 ou selon la revendication 9, **caractérisé en ce que** l'entretoise (29, 30) ou une pièce (30) de l'entretoise (29, 30) comporte une structure de base ramifiée en forme de Y, dans les branches (34) de laquelle des points d'appui (31, 32) sont prévus pour la fixation de l'entretoise (29, 30) sur une structure de fuselage d'un avion.

15. Train d'atterrissage d'avion selon la revendication 14, **caractérisé en ce qu'**au moins un élément jointif (33) est prévu, qui s'étend entre les branches (34) de la structure de base ramifiée en forme de Y.

16. Train d'atterrissage d'avion selon l'une des revendications précédentes, **caractérisé en ce que** le matériau composite renforcé par des fibres comporte des fibres de renforcement (16, 17) longue ou s'étendant en continu, telles que des fibres de verre, des fibres d'aramides ou des fibres de carbone.

17. Train d'atterrissage d'avion selon la revendication 16, **caractérisé en ce que** les fibres sont encastrées dans une matrice, en particulier une matrice constituée de ou comprenant un matériau thermodurcissable ou thermoplastique.

18. Train d'atterrissage d'avion selon l'une des revendications précédentes, **caractérisé en ce que** le matériau composite renforcé par des fibres comporte plusieurs produits semi-finis (12) plans textiles stratifiés, en particulier des tissus, nappes ou tricots.

19. Train d'atterrissage d'avion selon l'une des revendications 10 à 18, **caractérisé en ce que** les zones de chevauchement sont reliées par des éléments de liaison (13), en particulier par des éléments de liaison (13) métalliques précontraints.

20. Train d'atterrissage d'avion selon la revendication 19, **caractérisé en ce que** les éléments de liaison sont disposés sur la zone de serrage supérieure et inférieure de la structure tubulaire centrale (2) selon la revendication 5 et/ou dans la zone des points d'appui (6, 7, 31, 32), au moyen desquels la jambe de train d'atterrissage (1) et/ou l'entretoise (30) selon la revendication 2 est fixée sur une structure de fuselage d'un avion.

21. Train d'atterrissage d'avion selon l'une des revendications 16 à 20, **caractérisé en ce qu'**au moins une partie des fibres de renforcement (16, 17) s'étendent approximativement parallèlement à l'axe de la structure tubulaire (2) et/ou parallèlement sur le trajet entre des points d'application de charge.

22. Train d'atterrissage d'avion selon l'une des revendications 16 à 21, **caractérisé en ce qu'**au moins dans la zone de l'un des points d'appui (3, 4, 31, 32) et/ou dans la zone de la ramification de l'entretoise (29, 30) construite en forme de Y, se trouve une construction isotrope ou une surépaisseur locale du matériau composite renforcé par des fibres.

23. Train d'atterrissage d'avion selon l'une des revendications précédentes, **caractérisé en ce que** les composants de la jambe de train d'atterrissage (1) et/ou de l'entretoise (29, 30) selon la revendication 2 sont joints les uns aux autres par une technique d'assemblage, en particulier par collage ou rivetage, ou sont fabriqués ensemble en une étape de production.

24. Procédé de fabrication d'une jambe de train d'atterrissage (1) et/ou d'une entretoise (29, 30) d'une jambe de train d'atterrissage (1) et/ou d'une ou de plusieurs pièces d'une entretoise (29, 30) et/ou d'une jambe de train d'atterrissage (1) d'un train d'atterrissage d'avion selon l'une des revendications 1 à 23, **caractérisé en ce que** la fabrication se fait au moyen du procédé de Resin Transfer Moulding.

25. Procédé selon la revendication 24, **caractérisé en ce que** d'abord des produits semi-finis de renforcement ou préformes secs ou préconsolidés sont positionnés dans un outil de formage, **en ce que** le vide est ensuite créé et **en ce qu'**enfin une résine composite est injectée dans l'outil de formage.

26. Procédé selon la revendication 24 ou 25, **caractérisé en ce que** le matériau fibreux de la structure tubulaire (2) est d'abord déposé sur un noyau selon une technique d'enroulement de filament.

27. Procédé selon l'une des revendications 24 à 26, **caractérisé en ce que** la jambe de train d'atterrissage (1) est réalisée selon l'une des revendications 5 à 23 et **en ce que** d'abord la coupe de fibres (21) pour une structure de coque (3) est déposée sur l'outil inférieur (23), **en ce qu'**ensuite un noyau d'enroulement (20) doté du matériau fibreux pour la structure tubulaire (2) est positionné dans l'outil de formage et **en ce que** la coupe de fibres pour l'autre structure de coque (4) est alors disposée.

28. Procédé selon la revendication 27, **caractérisé en ce que** le matériau fibreux pour la structure tubulaire (2) est imprégné de résine avant l'introduction dans l'outil de formage et de préférence dès la dépose par enroulement de filament du matériau fibreux sur un noyau (20).

29. Procédé selon l'une des revendications 24 à 28, **caractérisé en ce que** l'outil de formage comporte un outil inférieur et un outil supérieur ou un outil inférieur et un film de vide.
